# EUROPEAN PATENT APPLICATION

(11) **EP 2 081 106 A1**
(43) Date of publication of application: **22.07.2009**
(21) Application number: 08150452.4
(22) Date of filing: 21.01.2008
(51) Int. Cl.: G06F 3/033

(54) **Computer peripheral**

(71) Applicant: YFY RFID Technologies Company Limited, Road Town, Tortola (VG)
(72) Inventor: Chen, Yi Chang, Taoyuan City (TW)
(74) Representative: Viering, Jentschura & Partner

(57) **Abstract**

A computer peripheral having both a mouse function and a GPS function is enclosed. The computer peripheral comprises a mouse encoder; a GPS device, a switch module, and a function controller. The switch module comprises a first port and a second port, wherein the first port is electrically connected to the mouse encoder and the second port is electrically connected to the GPS device. The function controller is used for selectively allowing a signal corresponding to one of the mouse encoder and the GPS device to be transmitted out of the computer peripheral in coordination with the switch module switching between the first port and the second port.

## Description

### CROSS-REFERENCES TO RELATED APPLICATIONS

Not applicable.

### BACKGROUND OF THE INVENTION

### Field of the Invention

The present invention relates to a computer peripheral. Mor e particularly, the present invention relates to a computer peripheral having the function of a global positioning system (GPS).

### Descriptions of the Related Art

Due to the internationalization, business people usually have to travel to many unfamiliar places for some tasks, such as giving presentations, attending meetings or paying courtesy visit to their clients. For the situation like this, business people usually need to carry computers, computer peripherals, and global positioning system (GPS) devices.

A computer, such as a laptop, is used for presentation and/or demonstrations. A computer peripheral, such as a mouse and/or a laser pointer, is used in corporation with the computer for the convenience and the fluency of the presentations and/or demonstrations. A GPS device is required to show the directions of their destinations to prevent them from getting lost or being late in a strange city.

Computers, computer peripherals, and GPS devices on the markets today are all in large sizes. Sizes of the computers, such as laptops, are reduced greatly in recent years. As to computer peripherals and GPS devices, their sizes do not change much. Therefore, carrying all of them together are still burdens to business people.

According to the above disadvantages and situations, how to reduce the burdens so that business people can travel conveniently is still a critical issue in this field.

### SUMMARY OF THE INVENTION

An objective of this invention is to provide a computer peripheral with the function of global positioning system (GPS). The computer peripheral comprises a mouse encoder, a GPS device, a switch module, and a function controller. The switch module comprises a first port and a second port. The first port is electrically connected to the mouse encoder, while the second port is electrically connected to the GPS device. The function controller selectively allows a signal corresponding to one of the mouse encoder and the GPS device to be transmitted out of the computer peripheral in coordination with the switch module switching between the first port and the second port.

With the aforementioned arrangement, the present invention integrates the GPS function within a single computer peripheral. A user therefore can carry only one single device but still use the two different functions.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** illustrates a first embodiment of the present invention;
**FIG. 2** illustrates a second embodiment of the present invention;
**FIG. 3** illustrates a third embodiment of the present invention;
**FIG. 4** illustrates a fourth embodiment of the present invention; and
**FIG. 5** illustrates a fifth embodiment of the present invention.

### DESCRIPTION OF THE PREFERRED EMBODIMENT

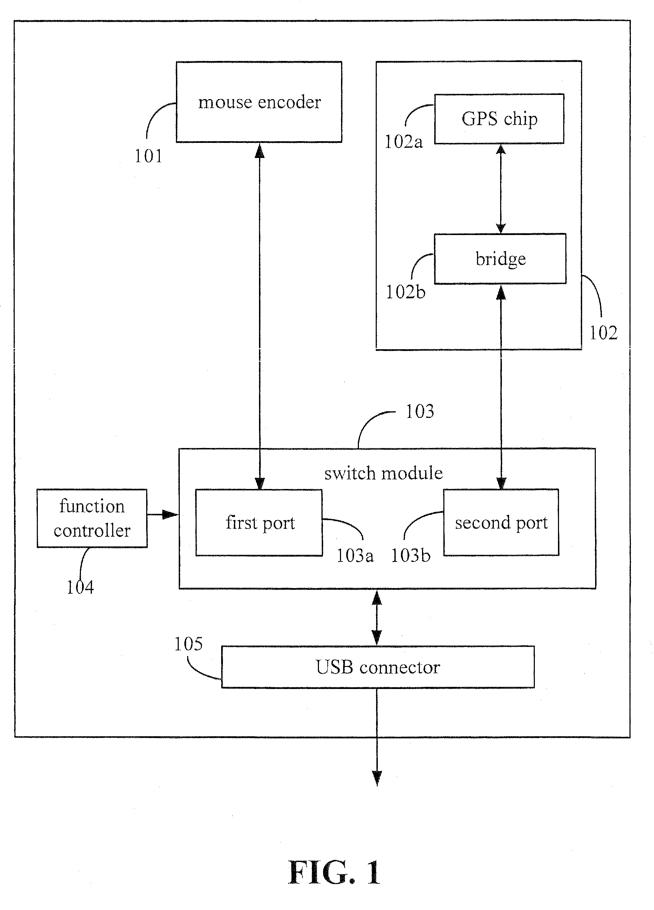

**FIG. 1** illustrates a first embodiment of the present invention, which is a computer peripheral **1.** The computer peripheral **1** comprises a mouse encoder **101,** a GPS device **102,** a switch module **103,** a function controller **104,** and a universal serial bus (USB) connector **105.**

The mouse encoder **101** conforms to the USB human interface device (HID) specification and is able to perform a mouse function like an optical mouse, a roller mouse, and/or any other mouse does. For example, the mouse encoder **101** may be an HT82M99A micro-controller (MCU) manufactured by the Holtek Semiconductor Inc. The GPS device **102** comprises a GPS chip **102a** and a bridge **102b** and is able to perform a GPS function like any GPS device does. The GPS chip **102a** follows a universal asynchronous receiver transmitter (UART) output standard. For example, the GPS chip **102a** may be an MT3318F IC manufactured by the MediaTek Inc. The bridge **102b** may be an FT232BL IC manufactured by the FTDI Chip. It is noted that the aforementioned specific ICs are used as examples but not to limit the present invention.

The switch module **103** comprises a first port **103a** and a second port **103b,** wherein the first port **103a** is electrically connected to the mouse encoder **101** and the second port **103b** is electrically connected to the GPS device **102.** In this embodiment, the switch module **103** may be a firmware or an FSUSB11 IC manufactured by Fairchild Semiconductor. Again, the specific IC is not used to limit the present invention. The function controller **104** is electrically connected to the switch module **103** to control switching. More specifically, the function controller **104** is used for selectively allowing a signal coming from the mouse encoder **101** or the GPS device **102** to be transmitted out of the computer peripheral **1** in coordination with the switch module **103** switching between the first port **103a** and the second port **103b,** which will be explained in details later.

Say that a user is on a business travel or a trip and would like to know the direction to the destination. A GPS function is required. In order to achieve that, the user connects the USB connector **105** of the computer peripheral **1** with a computer. In this embodiment, the default function of the computer peripheral **1** is the mouse function. It means that the user has to enable the GPS function by the function controller **104** after connecting the USB connector **105** to the computer. In this embodiment, the function controller **104** is a button, so the user can enable the GPS function by pushing the button.

When the GPS function is enabled, a signal coming from the GPS device **102** can be transmitted out of the computer peripheral **1.** To be more specific, the bridge **102b** is electrically connected to the GPS chip **102a** and the second port **103b** and is configured for converting the UART output standard into a USB standard. Consequently, when the GPS chip **102a** generates a GPS signal with the UART output standard, the bridge **102b** converts the GPS signal with the UART output standard into the USB standard. After the conversion, the signal with the USB standard is outputted to the second port **103b** of the switch module **103.** Since the function controller **104** allows a signal inputted to the second port **103b** to pass, the signal with the USB standard is able to be transmitted out of the computer peripheral **1** to the computer through the USB connector **105.** The computer runs GPS software to process the GPS signal. Thus, the user can know the direction to the destination on a screen of the computer.

On the other hand, if the user wants to use the mouse function after using the GPS function, the user simply enables the mouse function by the function controller **104.** Since the function controller **104** is a button in this embodiment, the user can enable the mouse function by pushing the function controller **104.** When the mouse function is enabled, a signal coming from the mouse encoder **101** can be transmitted out of the computer peripheral **1.**

In this embodiment, the default function of the computer peripheral **1** is the mouse encoder. However, the default function may be the GPS function in other embodiments. The function controller **104** can be a switch in other embodiments.

According to the aforementioned description, the mouse encoder **101** and the GPS device **102** are integrated in one single device, i.e. the computer peripheral **1.** Users can switch between the GPS function and the mouse function by simply pressing the function controller **104.**

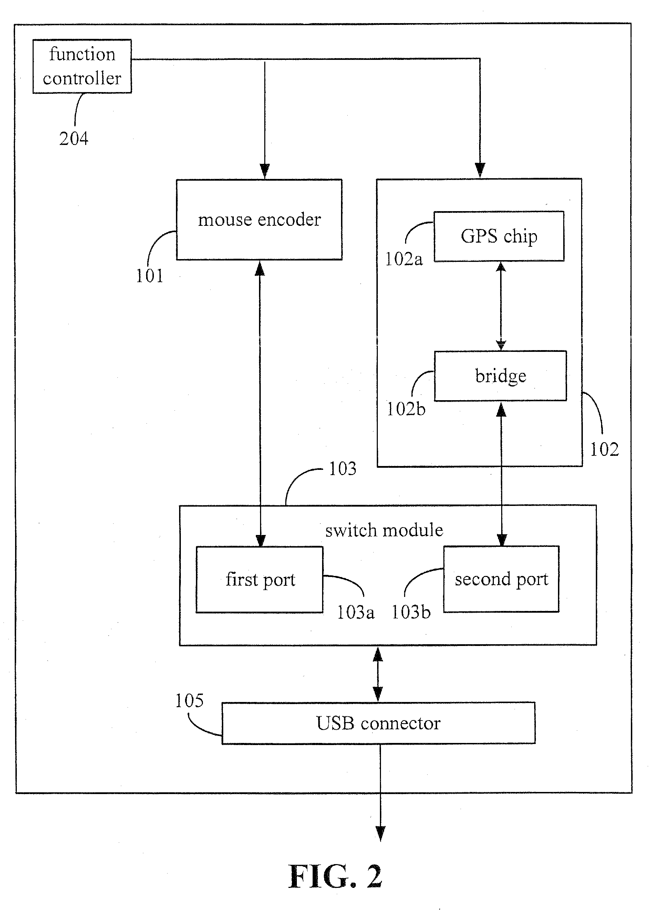

**FIG. 2** illustrates a second embodiment of the present invention, which is also a computer peripheral **2.** The computer peripheral **2** comprises a mouse encoder **101,** a GPS device **102,** a switch module **103,** a function controller **204,** and a USB connector **105.**

The switch module **103** comprises a first port **103a** and a second port **103b,** wherein the first port **103a** is electrically connected to the mouse encoder **101** and the second port **103b** is electrically connected to the GPS device **102.** The function controller **204** selectively allows a signal coming from the mouse encoder **101** or the GPS device **102** to be transmitted out of the computer peripheral **2** in coordination with the switch module **103** switching between the first port **103a** and the second port **103b.** Unlike the function controller **104** in the first embodiment which controls the switch module **103** to achieve the selection, the function controller **204** directly controls the mouse encoder **102** and the GPS device **104** to achieve the selection.

Similarly, a user can switch the mouse function and the GPS function via the function controller **204,** which is also a button in this embodiment. However, the function controller may be a switch in other embodiments. Assume that the default function of the computer peripheral **2** is the mouse function. When a user firstly pushes the function controller **204,** it means that the user switches from the mouse function to the GPS function. In other words, a signal coming from the GPS device is desired. Therefore, the function controller **204** activates the GPS device **102** and turns off the mouse encoder **101.** After the activation, the signal coming from the GPS device **102** forces the switch module **103** to switch on the second port **103b.** The signal can be transmitted out of the computer peripheral **2** through the USB connector **105** thereby.

When the user pushes the function controller **204** again, it means that the user would like to switch from the GPS function to the mouse function. In other words, a signal coming from the mouse encoder is desired. The function controller **204** now activates the mouse encoder **101** and turns off the GPS device **102.** After activation, the signal coming from the mouse encoder **101** forces the switch module **103** to switch on the first port **103a.** The signal can be transmitted out of the computer peripheral **2** through the USB connector **105** thereby.

In this embodiment, the default function of the computer peripheral **2** is the mouse encoder. However, the default function may be the GPS functions in other embodiments. The second embodiment provides an alternative way to integrate the mouse encoder **101** and the GPS device **102** within a single device, i.e. the computer peripheral **2.**

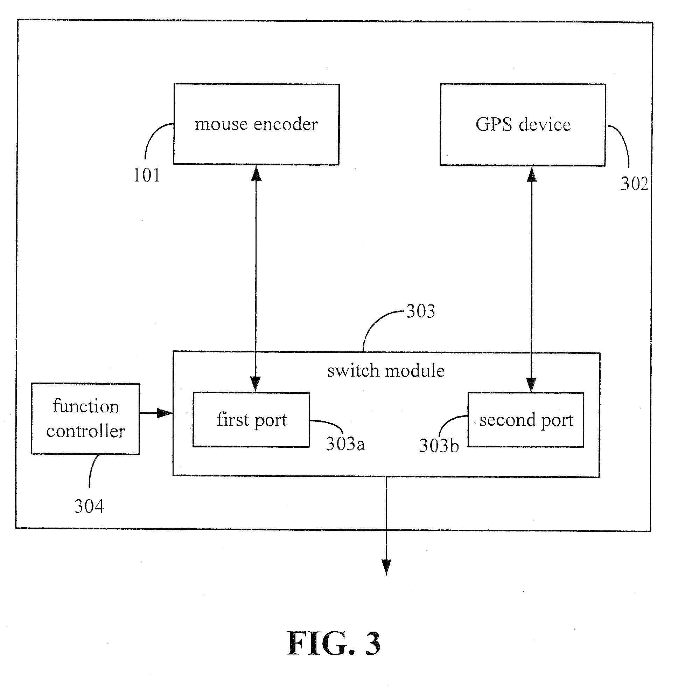

**FIG. 3** illustrates a third embodiment of the present invention, which is a computer peripheral **3** for use in a wireless environment. The computer peripheral **3** comprises a mouse encoder **101,** a GPS device **302,** a switch module **303,** and a function controller **304.**

The mouse encoder **101** is the same as that in the first embodiment. The GPS device **302** is able to perform a GPS function like any GPS device does. For example, the GPS device **302** may be an MT3318F IC manufactured by the MediaTek Inc. The switch module **303** also comprises a first port **303a** and a second port **303b,** wherein the first port **303a** is electrically connected to the mouse encoder **101** and the second port **303b** is electrically connected to the GPS device **302.** Furthermore, the switch module **303** is a Bluetooth processor and may be a BCM2037 IC manufactured by Broadcom Cooperation.

The function controller **304** is electrically connected to the switch module **303** to control the switching. The function controller **304** selectively allows a signal coming from the mouse encoder **101** or the GPS device **302** to be transmitted out of the computer peripheral **3** in coordination with the switch module **303** switching between the first port **303a** and the second port **303b.**

The user may use the function controller **304** to switch between the GPS device **302** and the mouse encoder **101,** i.e. to enable one of the GPS function and the mouse function. Similar to the first embodiment, as the GPS function of the computer peripheral **3** is enabled, a signal coming from the GPS device **302** can be transmitted out of the computer peripheral **3.** On the other hand, as the mouse function is enabled, a signal coming from the mouse encoder **101** can be transmitted out of the computer peripheral **3.**

According to the aforementioned description, the user also can have a computer peripheral that has both the mouse function and the GPS function even in a wireless environment. The user can switch between the mouse function and the GPS function by simply using the function controller **304.**

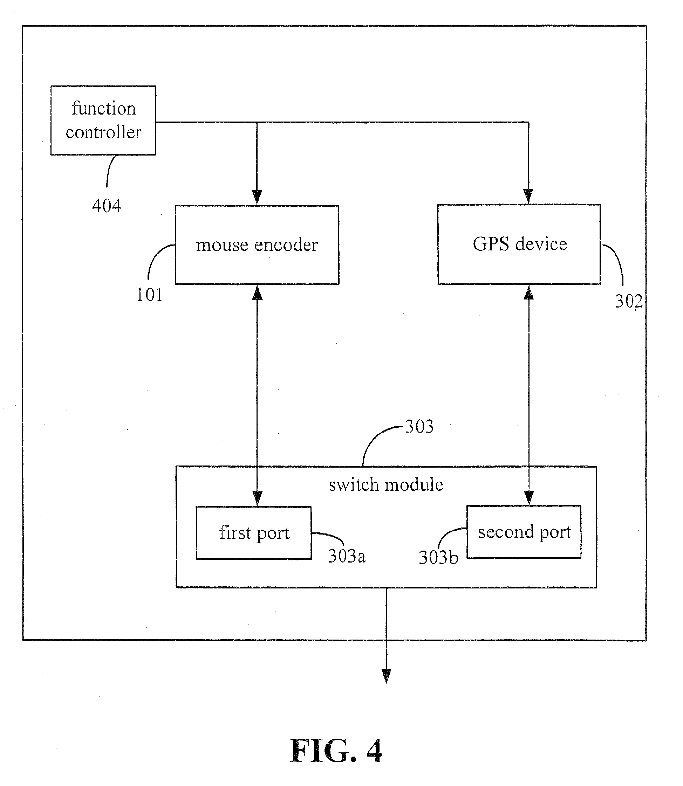

**FIG. 4** illustrates a fourth embodiment of the present invention, which is a computer peripheral **4** for use in a wireless environment. The computer peripheral **4** comprises a mouse encoder **101,** a GPS device **302,** a switch module **303,** and a function controller **404.**

The mouse encoder **101,** the GPS device **302,** and the switch module **303** are the same as those in the third embodiment, so their functionalities and connections are not repeated. The function controller **404** selectively allows a signal coming from the mouse encoder **101** or the GPS device **302** to be transmitted out of the computer peripheral **4** in accordance with the switch module **303** switching between the first port **303a** and the second port **303b.**

A user can use the function controller **404** to switch between the mouse encoder **101** and the GPS device **302.** To be more specific, if the mouse function is performing, the user can use the function controller **404** to enable the GPS function and disable the mouse function. On the other hand, if the GPS function is performing, the user can use the function controller **404** to enable the mouse function and disable the GPS function.

Similar to the second embodiment, when the user uses the function controller **404** to switch to the GPS device **302,** meaning that a signal coming from the GPS device **302** is desired, the function controller **404** activates the GPS device **302** and turns off the mouse encoder **101.** After the activation, the signal coming from the GPS device **302** forces the switch module **303** to switch on the second port **103b.** When the user uses the function controller **404** to switch to the mouse encoder **101,** meaning that a signal coming from the mouse encoder **101** is desired, the function controller **404** activates the mouse encoder **101** and turns off the GPS device **302.** After the activation, the signal coming from the mouse encoder **101** forces the switch module **103** to switch on the first port **103a.**

The function controller **404** provides an alternative approach for the user to switch between the GPS function and the mouse function.

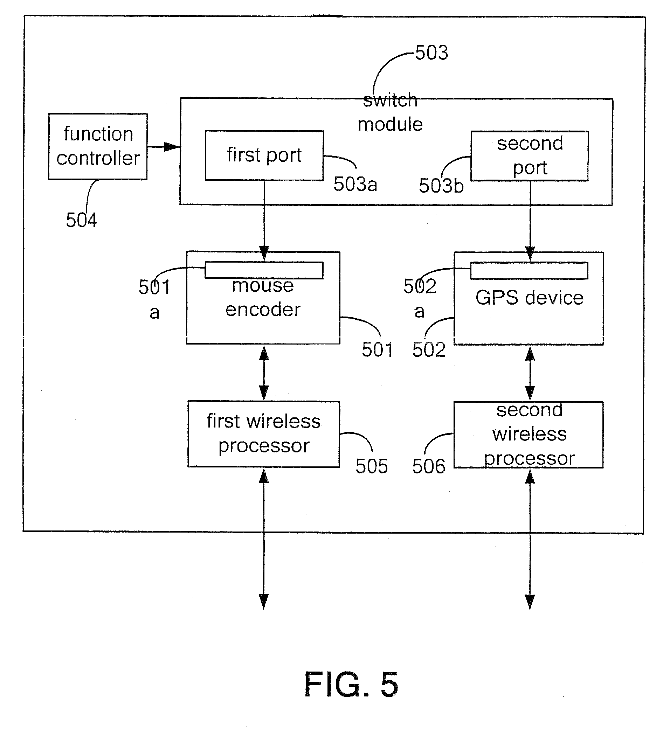

**FIG. 5** illustrates a fifth embodiment of the present invention, which is a computer peripheral **5** for use in a wireless environment. The computer peripheral **5** comprises a mouse encoder **501,** a GPS device **502,** a switch module **503,** a function controller **504,** a first wireless processor **505,** and a second wireless processor **506.**

The mouse encoder **501** is able to perform a mouse function like a wireless optical mouse, a wireless roller mouse, and/or any other wireless mouse does. For example, the mouse encoder **501** may be a CYRF69103 IC manufactured by the Cypress Semiconductor. The mouse encoder **501** comprises a power pin **501a.** The GPS device **502** is similar to the GPS device **302** in the third and fourth embodiments with a power pin **502a.**

The switch module **503** comprises a first port **503a** and a second port **503b,** wherein the first port **503a** is electrically connected to the power pin **501a** of the mouse encoder **501** and the second port **503b** is electrically connected to the power pin **502a** of the GPS device **502.**

The function controller **504** selectively allows a signal coming from the mouse encoder **501** or the GPS device **502** to be transmitted out of the computer peripheral **5** in coordination with the switch module **503** switching between the first port **503a** and the second port **503b.** To be more specific, the function controller **504** controls the switch module **503** to power on one of the mouse encoder **501** and the GPS device **502.**

The functionalities of the function controller **504** are similar to those of the function controllers **104, 204, 304, 404.** That is, a user can use the function controller **504** to switch between the mouse encoder **501** and the GPS device **502,** i.e. to enable one of the mouse function and the GPS function.

Assume that the function controller **504** is a button and assume that the user has pushed the function controller **504** in order to activate the mouse function. The function controller **504** controls the switch module **503** to power on the mouse encoder **501.** After that, the first wireless processor **505** will transmit a signal coming from the mouse encoder **501** out of the computer peripheral **5.** In the embodiment, the first wireless processor **505** is a wireless USB processor. On the other hand, assume that the user has pushed the function controller **504** in order to activate the GPS function. The function controller **504** controls the switch module **503** to power on the GPS device **502.** After that, the second wireless processor **506** will transmit a signal coming from the GPS device **502** out of the computer peripheral **5.** In the embodiment, the second wireless processor **506** is a Bluetooth processor or a wireless USB processor.

In other embodiments, the function controller **504** may be a switch to switch between the mouse encoder **501** and the GPS device **502** instead of powering them on.

With the aforementioned arrangement, the present invention integrates a mouse function and a GPS function within a single computer peripheral. A user therefore can carry only one single device but still use the two different functions.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A computer peripheral, comprising:
a mouse encoder;
a global positioning system (GPS) device;
a switch module, comprising:
a first port, electrically connected to the mouse encoder; and
a second port, electrically connected to the GPS device;
a function controller for selectively allowing a signal corresponding to one of the mouse encoder and the GPS device to be transmitted out of the computer peripheral in coordination with the switch module switching between the first port and the second port.

2. The computer peripheral of claim 1, wherein the GPS device comprises:
a GPS chip with a universal asynchronous receiver transmitter (UART) output standard; and
a bridge, electrically connected to the GPS chip and the second port, for converting the UART output standard into a universal serial bus (USB) standard.

3. The computer peripheral of claim 1, wherein the function controller activates the GPS device when a signal corresponding to the GPS device is requested.

4. The computer peripheral of claim 3, wherein the GPS device requests the switch module to switch on the second port after the activation.

5. The computer peripheral of claim 1, wherein the function controller activates the mouse encoder when a signal corresponding to the mouse encoder is requested.

6. The computer peripheral of claim 5, wherein the mouse encoder requests the switch module to switch on the first port after the activation.

7. The computer peripheral of claim 1, wherein the switch module is a Bluetooth processor.

8. The computer peripheral of claim 1, wherein the function controller is electrically connected to the switch module to control the switching.

9. The computer peripheral of claim 1, wherein the first port is electrically connected to a power pin of the mouse encoder, the second port is electrically connected to a power pin of the GPS device, and the function controller controls the switch module to power on one of the mouse encoder and the GPS device.

10. The computer peripheral of claim 9, further comprising a first wireless processor, connected to the mouse encoder, for transmitting a signal coming from the mouse encoder out.

11. The computer peripheral of claim 10, further comprising a second wireless processor, connected to the GPS device, for transmitting a signal coming from the GPS device out.

12. The computer peripheral of claim 10, further comprising a Bluetooth processor, connected to the GPS device, for transmitting a signal coming from the GPS device out.

13. The computer peripheral of claim 1, wherein the function controller is one of a button and a switch.

14. The computer peripheral of claim 1, wherein the switch module is a firmware.
